# EUROPÄISCHE PATENTSCHRIFT

(11) **EP 1 076 184 B1**
(45) Veröffentlichungstag und Bekanntmachung des Hinweises auf die Patenterteilung: **16.03.2005**
(21) Anmeldenummer: 00810684.1
(22) Anmeldetag: 31.07.2000
(51) Int. Cl.: F16B 1/00, F01D 25/24, F01D 5/08

(54) **Befestigungs- und Fixierungsvorrichtung**
Fixing device
Dispositf de fixation

(30) Priorität: 13.08.1999 DE 19938443
(43) Veröffentlichungstag der Anmeldung: 14.02.2001
(73) Patentinhaber: ALSTOM Technology Ltd, 5400 Baden (CH)
(72) Erfinder: Kreis, Erhard, 8112 Otelfingen (CH); Nagler, Christoph, 8032 Zürich (CH); Rathmann, Ulrich, 5415 Nussbaumen (CH)

(56) Entgegenhaltungen:
- FR-A- 2 761 119
- US-A- 3 860 358
- US-A- 4 247 247
- US-A- 4 472 108
- US-A- 5 127 794
- US-A- 5 197 853
- US-A- 5 273 396
- US-A- 5 762 472

## Beschreibung

### Technisches Gebiet

Die Erfindung betrifft eine Vorrichtung zur Befestigung und Fixierung von Bauteilen auf einer zylindrischen Wand gemäss dem Oberbegriff des unabhängigen Anspruchs.

### Stand der Technik

In zahlreichen technischen Anwendungen müssen Bauteilen auf zylindrischen Wandkonturen befestigt und fixiert werden. Dabei müssen die Bauteile in radialer, axialer und Umfangsrichtung fixiert werden. Ein typisches Beispiel aus dem Turbomaschinenbau ist die Befestigung von Hitzschutzschilden auf Rotoren oder in Gehäusen. Die Aufgabe wird üblicherweise gelöst, indem Formelemente wie z.B. in US 5 273 396 an den zu verankernden Bauteilen und Gegenstücke, die in der Wand eingearbeitet sind, ineinandergreifen, und so eine formschlüssige Verbindung herstellen. Konstruktiv wird versucht, mit möglichst wenigen dieser Formelementen auszukommen. Eine verbreitete Lösung ist, die Fixierung des Bauteils in alle drei Raumrichtungen mit einem einzigen Formelement vorzunehmen. Mit steigenden Anforderungen an die Definiertheit der Einbaulage der Elemente aber steigt der Fertigungsaufwand solcher Formelemente erheblich. Die erforderliche Herstellgenauigkeit steigt auch aus Gründen der Montage (Doppelpassung, "Scharniereffekt") überproportional zur Einbaugenauigkeit, welche mit der zitierten Lösung letztlich auch an eine praktische Grenze stösst.

### Darstellung der Erfindung

An dieser Stelle schlägt die Erfindung, wie sie in den Ansprüchen gekennzeichnet ist, vor, eine Trennung der Fixierungsaufgaben vorzunehmen, dergestalt, dass pro Raumrichtung, in welche eine Fixierung erfolgen muss, jeweils wenigstens ein Formelement vorhanden ist, welches mit seinem Gegenstück in dieser Richtung eine wohldefinierte Passgenauigkeit und in den anderen Raumrichtungen ein reichliches Spiel aufweist.

Kern der Erfindung ist also eine Verteilung der Fixierungsaufgabe in unterschiedliche Raumrichtungen auf unterschiedliche Befestigungselemente. Dadurch kann jedes Befestigungselement und sein jeweils zugehöriges Gegenstück in eben dieser Raumrichtung mit der erforderlichen Genauigkeit gefertigt werden, ohne dabei Einfluss auf die Passgenauigkeit in den anderen Raumrichtungen zu nehmen. In der Summe resultiert diese Massnahme in einem verringerten Fertigungs- und Montageaufwand.

Falls erforderlich, kann die Befestigung kipp- und/oder verdrehsicher ausgeführt werden, indem für eine Raumrichtung zwei Befestigungselemente an Stellen angeordnet werden, die auf einer senkrecht zur Kipp- oder Vedrehachse gelegenen Richtung möglichst weit voneinander entfernt sind. Bezogen auf ein Hitzeschutzschild, das eine im Wesentlichen zweidimensionale Struktur ohne erhebliche Ausdehnung in radialer Richtung darstellt, hiesse das, zwei radiale und/oder Umfangsfixierungen in möglichst grossem axialem Abstand anzuordnen, oder zwei axiale Fixierungen in möglichst grossem Abstand in Umfangsrichtung.

Ebenfalls gerade im Zusammenhang mit der Fixierung von Hitzeschutzschilden auf Rotoren oder in den Gehäusen von Turbomaschinen kann es sinnvoll sein, in einem axialen Schnitt insgesamt drei radiale Befestigungs- und Fixierungselemente anzubringen, und zwar zwei axial aussen gelegene, die im Normalbetrieb die radiale Fixierung des Bauteils an der Wand übernehmen, und ein mittleres Element, das ein in radialer Richtung wohldefiniertes Spiel mit seinem Gegenstück aufweist. Durch diese Ausführungsart kann sich der Hitzeschutzschild zunächst in radialer Richtung frei verformen, um thermische Dehnungen möglichst spannungsfrei aufzunehmen. Bei zu starker radialer Verformung aber besteht die Gefahr, dass der Hitzeschutzschild an ein gegenüberliegendes relativbewegtes Bauteil anstreift. Die resultierende Reibungswärme sorgt wiederum für eine Selbstverstärkung des Anstreifens, was in der Konsequenz zu einer Havarie eines gesamten Turbosatzes führen kann. Hier wird durch die mittlere Aufnahme die mögliche radiale Verformung auf das Mass begrenzt, das als radiales Spiel dieser Aufnahme vorgesehen ist.

### Kurze Beschreibung der Zeichnung

Die Erfindung wird nachfolgend anhand eines in der Zeichnung dargestellten Ausführungsbeispiels näher erläutert. In einzelnen zeigen
- Fig. 1 einen Längsschnitt durch eine vierstufige Turbine eines Gasturbosatzes
- Fig. 2 eine erste Ausführungsform der Erfindung an einem Hitzeschutzschild des Gasturbosatzes im Längsschnitt
- Fig. 3 und Fig. 4 zwei Ausführungsformen der Erfindung bei der Befestigung eines Hitzeschutzschildes im Gehäuse einer Gasturbine im Querschnitt.
- Fig. 5 einen Hitzeschutzschild mit erfindungsgemässer Befestigungsvorrichtung in einer Draufsicht.
- Fig. 6 eine zweite bevorzugte Ausführungsform der Erfindung im Längsschnitt.

Die Anwendung der Erfindung, wie sie in den Ansprüchen gekennzeichnet ist, ist selbstverständlich nicht auf Hitzeschutzschilde in Gasturbinen beschränkt. Ebenso erlaubt die Erfindung wesentlich grössere gestalterische Freiräume, als dies im Ausführungsbeispiel darstellbar ist. Die nachfolgenden Ausführungen dienen lediglich der Illustration der Erfindung, und nicht als deren Abgrenzung.

### Weg zur Ausführung der Erfindung

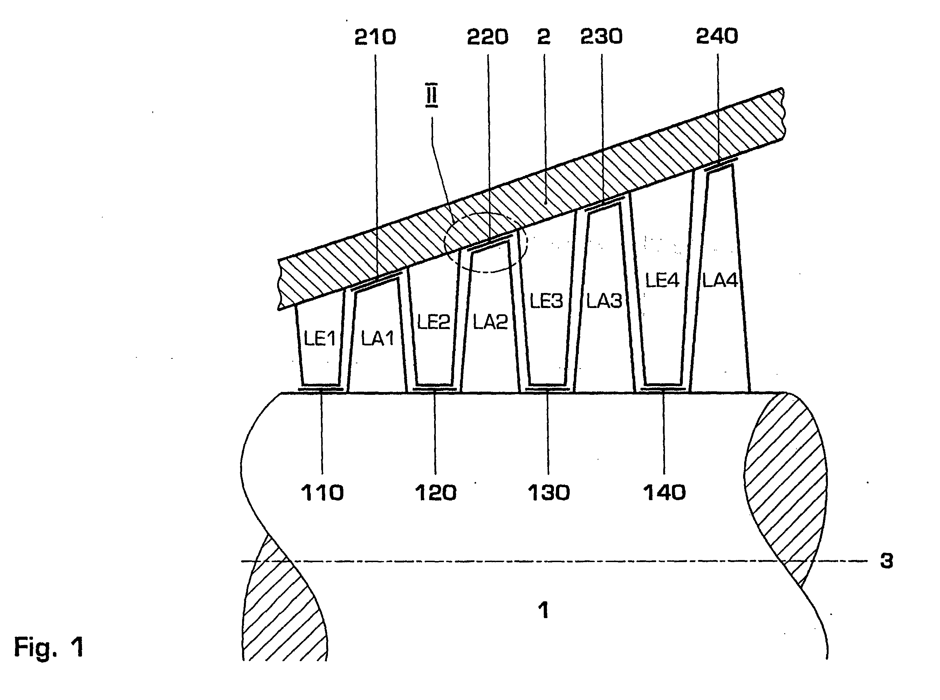

In Fig. 1 ist ein axialer Schnitt durch eine vierstufige Turbine eines Gasturbosatzes dargestellt. Im Betrieb dreht sich die Welle 1 um die Turbinenachse 3. Auf der Welle 1 sind die Laufschaufeln LA1 bis LA4 angeordnet; die zugehörigen Leitschaufeln LE1 bis LE4 sind im Gehäuse 2 befestigt. Gegenüber den Leitschaufelspitzen sind die Rotor-Hitzeschutzschilde 110, 120, 130 und 140 mittels geeigneter Befestigungsmittel auf dem Rotor befestigt. Analog sind gegenüber den Laufschaufelspitzen die Gehäuse-Hitzeschutzschilde 210, 220, 230 und 240 auf geeignete Weise am Gehäuse befestigt. Dabei wird man in der Realität nicht zwingend in jeder Turbinenstufe Hitzeschutzschilde finden; in der Praxis wird man gerade in den letzten Stufen, in denen das Arbeitsmedium schon stark entspannt und abgekühlt ist, oftmals auf diese verzichten. Andererseits ist der Einsatz von Hitzeschutzschilden mit der erfindungsgemässen Befestigungsvorrichtung keineswegs auf die Turbine eines Gasturbosatzes beschränkt: Die Erfindung kann auch beispielsweise in Dampfturbinen oder in Turboverdichtern, und dort insbesondere in den Hochdruckstufen, mit Vorteil eingesetzt werden. Des weiteren beschränkt sich der Einsatz der erfindungsgemässen Befestigungs- und Fixierungsvorrichtung keineswegs auf die Verankerung von Hitzeschutzschilden in Turbomaschinen.

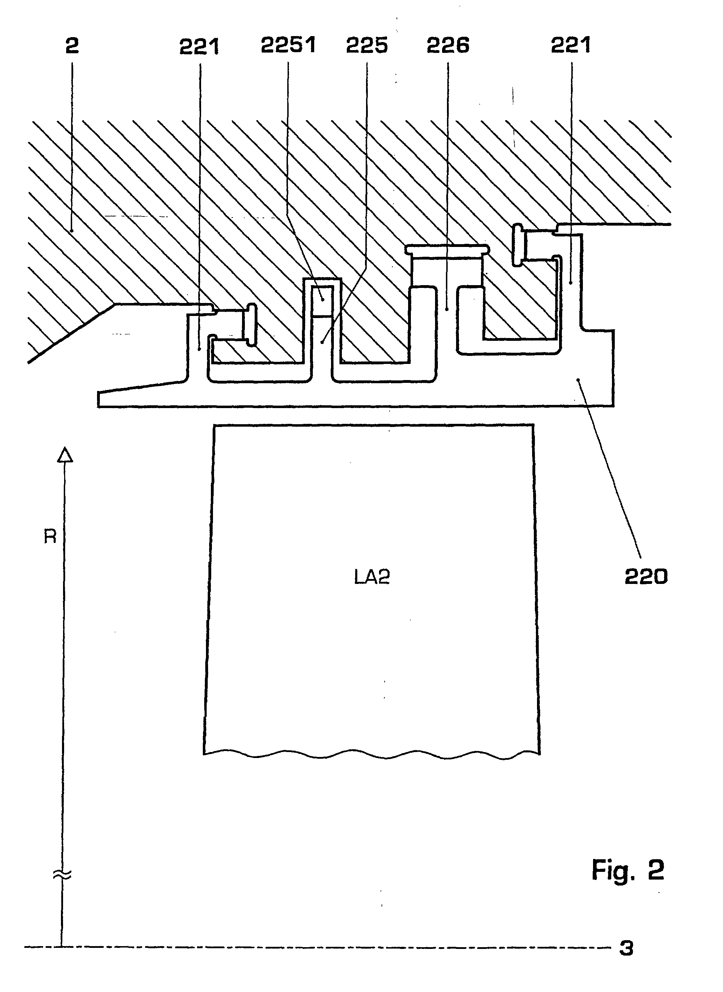

Fig. 2 zeigt einen Hitzeschutzschild, beispielsweise den Hitzeschutzschild 220, mit der erfindungsgemässen Befestigungsvorrichtung im Detail. Der Hitzeschutzschild ist mit den Befestigungselementen 221, 225 und 226 versehen, deren Gegenstücke Nuten im Gehäuse 2 sind. In der Figur sind die Verhältnisse in Umfangsrichtung nicht zu entnehmen, sie ergeben sich jedoch zwanglos aus der folgenden Darstellung. Die Befestigungselemente 221 sind Haken zur radialen Fixierung. Durch die Anordnung zweier radial wirkender Befestigungselemente in axial aussen liegenden Positionen wird eine Kippsicherheit des Hitzeschutzschildes erzielt. In axialer Richtung und - aus der Figur nicht erkennbar- in Umfangsrichtung weisen die Befestigungselemente 221 ein grosszügig bemessenes Spiel auf. Daher müssen nur die radial wirkenden Flächen der Befestigungselemente und der zugehörigen Gehäusenuten passgenau bearbeitet werden. Analog weist das Formelement 226 Spiel in radialer Richtung und Umfangsrichtung auf, und fixiert den Hitzeschutzschild 220 in axialer Richtung. Das Element 225 letztlich hat axiales und radiales Spiel, und wirkt in hier nicht dargestellter Weise über die Fläche 2251 als Umfangsfixierung.

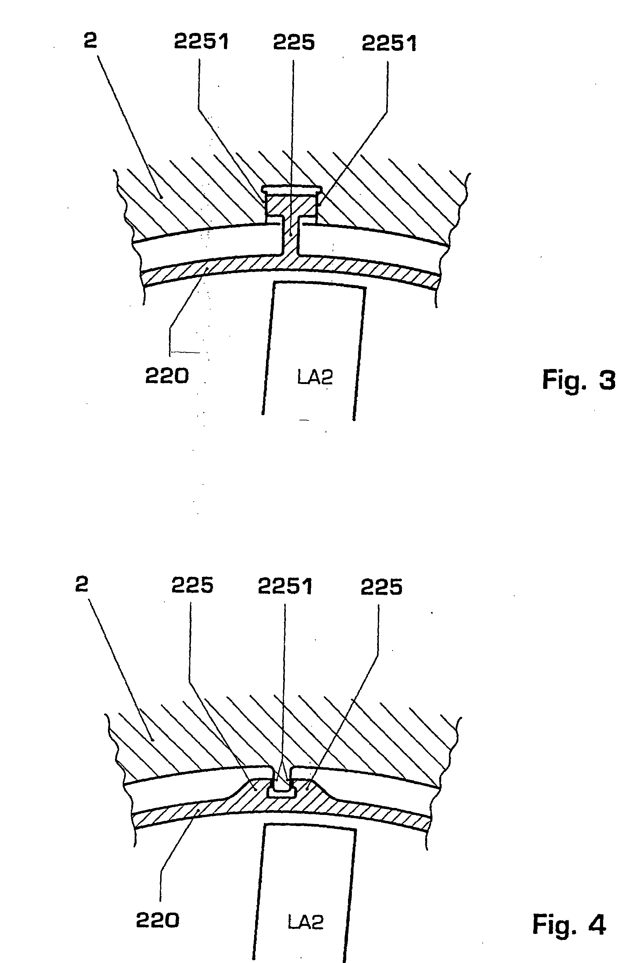

Die Fixierung des Hitzeschutzschildes 220 in Umfangsrichtung ist in den Figuren 3 und 4 in einer Sicht in Richtung der Maschinenachse dargestellt. Bei der in Fig. 3 dargestellten Ausführungsform greift ein Element 225 in eine Nut des Gehäuses 2, und stützt sich über die Flächen 2251 an dem Gehäuse 2 ab. Bei dem Beispiel in Fig. 4 bilden zwei Elemente 225 eine Aussparung, in die eine Gehäusenase 21 eingreift, an welcher Gehäusenase der Hitzeschutzschild 220 über die Flächen 2251 in Umfangsrichtung abgestützt wird.

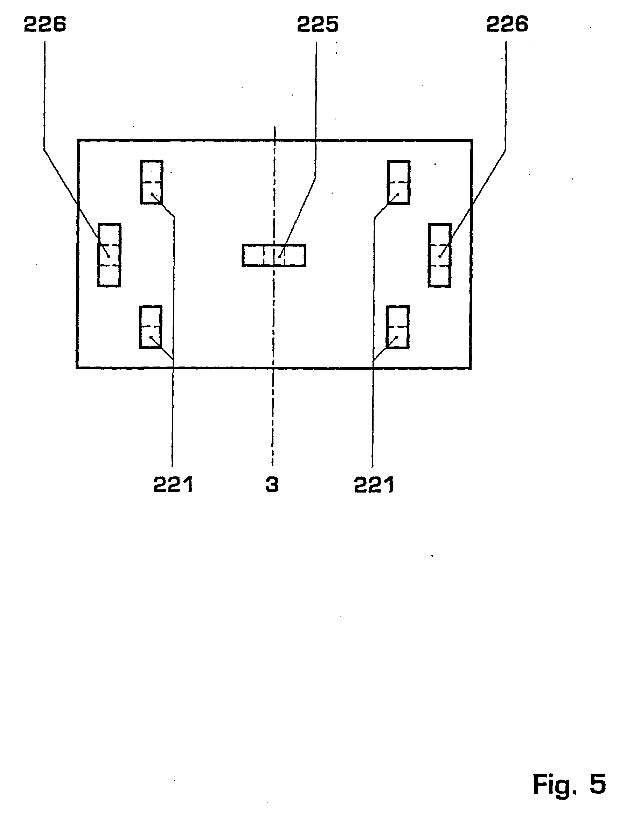

In Fig. 5 ist ein Hitzeschutzschild mit einem Beispiel für die Ausführung einer erfindungsgemässen Befestigungsvorrichtung in einer Sicht vom Gehäuse zur Maschinenachse hin dargestellt. Vier radiale Befestigungselemente 221 sind in den Ecken des Hitzeschutzschildes angeordnet. Dieser ist durch diese Anordnung auf die bestmögliche Weise gegen Verkippen gesichert. Zwei axiale Befestigungselemente 226 sind in Umfangsrichtung möglichst weit voneinander entfernt angeordnet. Sie fixieren den Hitzeschutzschild in axialer Richtung, und sichern ihn gegen Verdrehen. Zentral ist ein einzelnes Element 225 zur Umfangsfixierung angeordnet. Die gewählte Anordnung zweier axialer Befestigungselemente 226 und eines Umfangs-Befestigungselementes 225 kann dabei ohne weiteres ausgetauscht werden gegen die Anordnung eines axialen Befestigungselementes 226 und zweier Umfangs-Befestigungselemente 225, wobei letztere denn in einem möglichst grossen axialen Abstand anzuordnen sind, und das axiale Befestigungselement 226 mit Vorteil in der Mitte des Hitzeschutzschildes anzubringen wäre. Bei der Anordnung mehrerer Befestigungselemente für eine Raumrichtung ist bevorzugt darauf zu achten, dass sie nicht auf oder in der Nähe einer Linie in der Richtung liegen, in welche sie wirken. Dies hätte einmal nachteilige Folgen aufgrund des bekannten "Scharniereffektes", also einer doppelten Passung. Andererseits würden thermische Differenzdehnungen zwischen dem Bauteil und der Wand behindert, was beispielsweise bei Hitzeschutzschilden hohe Eigenspannungen induzieren und die Lebensdauer drastisch herabsetzen würde.

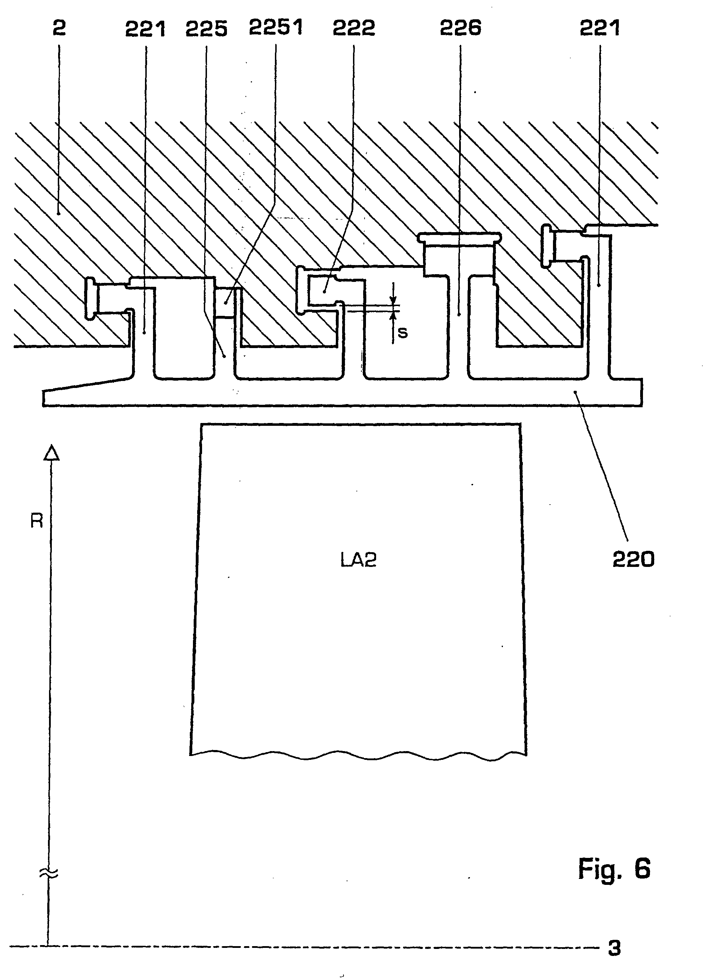

Eine weitere Vorzugsvariante der Erfindung ist in Fig. 6 dargestellt. Diese unterscheidet sich von der in Fig. 2 dargestellten im wesentlichen durch das Befestigungselement 222, welches Spiel in alle Richtungen aufweist und somit vordergründig keine Funktion erfüllt. Festzustellen ist, dass das radiale Spiel s des Elements 222 wohldefiniert ist, während das Spielmass in den anderen Richtungen unwesentlich ist und hier nur insofern definiert wird, dass in diesen Richtungen eine freie Beweglichkeit des Befestigungselementes 222 gegeben sein muss. Das Element 222 erfüllt tatsächlich nur in Extremsituationen einen Zweck. Im Normalfall nämlich tragen in radialer Richtung nur die axial äusseren Elemente 221, und der Hitzeschutzschild 220 kann in radialer Richtung Verformungen aufgrund thermischer Dehnungen frei aufnehmen. Bei einer exzessiven Verformung zur Schaufel LA2 hin allerdings kann es durch Anstreifen zu einer Situation kommen, welche die Betriebsicherheit hochgradig gefährdet. Hier greift das Element 222: Wenn die radiale Verformung das Mass s erreicht, trägt das Element 222 in radialer Richtung, und verhindert exzessive radiale Verformung des Hitzeschutzschildes.

### Bezugszeichenliste

- 1: Welle
- 2: Gehäuse
- 3: Maschinenachse
- 21: Gehäusenase
- 110: Rotor-Hitzeschutzschild
- 120: Rotor-Hitzeschutzschild
- 130: Rotor-Hitzeschutzschild
- 140: Rotor-Hitzeschutzschild
- 210: Gehäuse-Hitzeschutzschild
- 220: Gehäuse-Hitzeschutzschild
- 221: radiales Befestigungselement, -Formelement
- 222: radiales Befestigungselement, -Formelement
- 225: Umfangs-Befestigungselement, -Formelement
- 226: axiales Befestigungselement, -Formelement
- 230: Gehäuse-Hitzeschutzschild
- 240: Gehäuse-Hitzeschutzschild
- 2251: Lagerfläche des Elementes 225
- LA1: Laufschaufel der ersten Turbinenstufe
- LA2: Laufschaufel der zweiten Turbinenstufe
- LA3: Laufschaufel der dritten Turbinenstufe
- LA4: Laufschaufel der vierten Turbinenstufe
- LE1: Leitschaufel der ersten Turbinenstufe
- LE2: Leitschaufel der zweiten Turbinenstufe
- LE3: Leitschaufel der dritten Turbinenstufe
- LE4: Leitschaufel der vierten Turbinenstufe
- R: radiale Richtung
- s: radiales Spiel des Elements 222

## Patentansprüche

1. Vorrichtung zur Befestigung und Fixierung von Bauteilen auf einer zylindrischen Wand, wobei die zylindrische Wand sowohl die konvexzylindrische Aussenkontur eines Zylinders als auch die konkavzylindrische Innenkontur eines Hohlzylinders sein kann, und wobei ein Bauteil in radialer, axialer und Umfangsrichtung zu fixieren ist, welche Befestigung und Fixierung durch Formelemente (221, 222, 225, 226) erfolgt, die an dem Bauteil angebracht sind, sowie durch ein Gegenstück zu jedem Formelement an der Wand, dergestalt, dass jeweils ein Formelement und ein Gegenstück ineinandergreifen, **dadurch gekennzeichnet, dass** das Bauteil (220) wenigstens drei Formelemente (221, 225, 226) aufweist, von denen wenigstens ein Formelement (221) mit seinem zugehörigen Gegenstück in radialer Richtung eine definierte Passgenauigkeit aufweist und in axialer und Umfangsrichtung Spiel aufweist, wenigstens ein Formelement (226) mit seinem zugehörigen Gegenstück in axialer Richtung eine definierte Passgenauigkeit aufweist und in radialer und Umfangsrichtung Spiel aufweist, und wenigstens ein Formelement (225) mit seinem zugehörigen Gegenstück in Umfangsrichtung eine definierte Passgenauigkeit aufweist und in radialer und axialer Richtung Spiel aufweist.

2. Vorrichtung nach Anspruch 1, wobei das Bauteil (220) über wenigstens zwei Formelemente (221) zur radialen Fixierung aufweist, die in axialem Abstand voneinander angeordnet sind.

3. Vorrichtung nach Anspruch 1, wobei das Bauteil (220) über wenigstens zwei Formelemente (225) zur Umfangs-Fixierung aufweist, die in axialem Abstand voneinander angeordnet sind.

4. Vorrichtung nach Anspruch 1, wobei das Bauteil (220) über wenigstens zwei Formelemente (226) zur axialen Fixierung aufweist, die in Abstand voneinander in Umfangsrichtung angeordnet sind.

5. Vorrichtung nach Anspruch 2, **dadurch gekennzeichnet, dass** in axialer Richtung zwischen den wenigstens zwei in axialem Abstand voneinander angeordneten Formelementen (221) zur radialen Fixierung ein Formelement (222) angeordnet ist, welches Formelement mit seinem zugehörigen Gegenstück ein beliebiges Spiel in axialer und Umfangsrichtung aufweist, und welches Formelement mit seinem zugehörigen Gegenstück ein wohldefiniertes Spiel (s) in radialer Richtung aufweist.

## Claims

1. Device for fastening and fixing components to a cylindrical wall, in which case the cylindrical wall may be both the convex-cylindrical outer contour of a cylinder and the concave-cylindrical inner contour of a hollow cylinder, and a component is to be fixed in the radial, axial and circumferential directions, the fastening and fixing being effected by shaped elements (221, 222, 225, 226) which are attached to the component and by a counterpart to each shaped element on the wall in such a way that in each case a shaped element and a counterpart interlock, **characterized in that** the component (220) has at least three shaped elements (221, 225, 226), of which at least one shaped element (221) has a defined accuracy of fit with its associated counterpart in the radial direction and has clearance in the axial and circumferential directions, at least one shaped element (226) has a defined accuracy of fit with its associated counterpart in the axial direction and has clearance in the radial and circumferential directions, and at least one shaped element (225) has a defined accuracy of fit with its associated counterpart in the circumferential direction and has clearance in the radial and axial directions.

2. Device according to Claim 1, the component (220) having at least two shaped elements (221) for the radial fixing, these shaped elements (221) being arranged at an axial distance from one another.

3. Device according to Claim 1, the component (220) having at least two shaped elements (225) for the circumferential fixing, these shaped elements (225) being arranged at an axial distance from one another.

4. Device according to Claim 1, the component (220) having at least two shaped elements (226) for the axial fixing, these shaped elements (226) being arranged at a distance from one another in the circumferential direction.

5. Device according to Claim 2, **characterized in that** a shaped element (222) is arranged in the axial direction between the at least two shaped elements (221) for the radial fixing which are arranged at an axial distance from one another, which shaped element, with its associated counterpart, has any desired clearance in the axial and circumferential directions and has a well-defined clearance (s) with its associated counterpart in the radial direction.

## Revendications

1. Dispositif pour la fixation de composants sur une paroi cylindrique, dans lequel la paroi cylindrique peut être à la fois le contour extérieur cylindrique convexe d'un cylindre et le contour intérieur cylindrique concave d'un cylindre creux, et dans lequel on veut fixer un composant dans une direction radiale, axiale et périphérique, la fixation s'effectuant au moyen d'éléments moulés (221, 222, 225, 226) qui sont montés sur le composant ainsi qu'au moyen d'une pièce conjuguée à chaque élément moulé sur la paroi, de telle sorte qu'un élément moulé et une pièce conjuguée s'engagent à chaque fois l'un dans l'autre, **caractérisé en ce que** le composant (220) présente au moins trois éléments moulés (221, 225, 226), dont au moins un élément moulé (221) présente avec sa pièce conjuguée une précision d'ajustement définie dans la direction radiale et présente un jeu dans la direction axiale et périphérique, au moins un élément moulé (226) présente avec sa pièce conjuguée une précision d'ajustement définie dans la direction axiale et présente un jeu dans la direction radiale et périphérique, et au moins un élément moulé (225) présente avec sa pièce conjuguée une précision d'ajustement définie dans la direction périphérique et présente un jeu dans la direction radiale et axiale.

2. Dispositif selon la revendication 1, dans lequel le composant (220) présente plus d'au moins deux éléments moulés (221) pour la fixation radiale, lesquels sont disposés à distance axiale les uns des autres.

3. Dispositif selon la revendication 1, dans lequel le composant (220) présente plus d'au moins deux éléments moulés (225) pour la fixation périphérique, lesquels sont disposés à distance axiale les uns des autres.

4. Dispositif selon la revendication 1, dans lequel le composant (220) présente plus d'au moins deux éléments moulés (226) pour la fixation axiale, lesquels sont disposés à distance les des autres dans la direction périphérique.

5. Dispositif selon la revendication 2, **caractérisé en ce que** dans la direction axiale entre les au moins deux éléments moulés (221) disposés à distance axiale les uns des autres pour la fixation radiale, on prévoit un élément moulé (222) qui présente avec sa pièce conjuguée associée un jeu quelconque dans la direction axiale et périphérique et qui présente avec sa pièce conjuguée associée un jeu (s) bien défini dans la direction radiale.
